# EUROPEAN PATENT SPECIFICATION

(11) **EP 1 974 352 B1**
(45) Date of publication and mention of the grant of the patent: **09.06.2010**
(21) Application number: 06817769.0
(22) Date of filing: 21.12.2006
(51) Int. Cl.: G11B 7/24

(54) **METHOD FOR PRODUCING A SPACE LAYER IN BETWEEN TWO DISKS WITH HIGH UNIFORMITY**
VERFAHREN ZUM PRODUZIEREN EINER ABSTANDSSCHICHT MIT HOHER GLEICHFÖRMIGKEIT ZWISCHEN ZWEI SCHEIBEN
PROCEDE DE PRODUCTION D'UNE COUCHE INTERCALAIRE ENTRE DEUX DISQUES AVEC UNE UNIFORMITE ELEVEE

(30) Priority: 22.12.2005 US 753146 P
(43) Date of publication of application: 01.10.2008
(73) Proprietor: Singulus Technologies AG, 63796 Kahl/Main (DE)
(72) Inventor: HEINZ, Bernd, CH-9470 Buchs (CH); YAVASER, Cem, CH-9478 Azmoos (CH); PFAFF, Thomas, CH-9470 Buchs (CH)
(74) Representative: Vossius & Partner
(86) International application number: PCT/CH2006/000719
(87) International publication number: WO 2007/071094

(56) References cited:
- EP-A- 1 361 041
- US-A1- 2002 031 632
- US-A1- 2003 179 693

## Description

### Field of the invention

The invention relates to the field of data storage media, especially optical storage media. The inventive method can be used for producing a space layer in between two disks with high uniformity. This technique can be used in optical disc production, where a highly uniform space layer is required. For example: BD-DL (blu-ray disk double layer), DVD-14/18, DVD+R9 (digital versatile media) and other multilayer media.

### Background of the invention

Using UV curable lacquer for bonding two substrates is a well known production step in optical disk production. The bonding layer thickness in this application is typically in the range of 20micron to 50micron. It is a mandatory production step for all DVD formats and is used as well for multi-layer media (like Blu-Ray Double Layer Disc) for providing a second information layer onto a first information layer carrying substrate (the so called 2P process).

In the first step of the 2P process a substrate (in the following called first substrate) with an information layer is produced e. g. by injection moulding and coated with layer material which is appropriate for the format (e. g. a reflective or semireflective layer). Then a second substrate (in the following called stamper substrate) is produced with a second information layer. This stamper substrate is bonded together with the first substrate using typically an UV-curable adhesive. In the next step the 2 substrates are being separated, whereby the UV resin with the image of the information layer of the stamper substrate must remain completely on the first substrate. Depending on the application it is also possible to transfer a metallic layer in a similar way from the stamper to the first substrate as described in US 6,117,284.

EP-A-1 361 041 discloses a method of and apparatus for manufacturing a multi-layer optical information recording medium, wherein a transfer layer on a surface of a mold has a thickness distribution along the radius direction that the layer is thick in an inner round portion but is gradually thinner toward an outer round portion, and an adhesive layer is formed between a surface of a signal substrate which bears a signal recording film and the mold which seats the transfer layer, the adhesive layer having a thickness distribution that the layer is thin in an inner round portion but is gradually thicker toward an outer round portion.

In US-A-2002/0031632, a method of manufacturing an optical disk is provided, the method comprising bonding a resin stamper having, on a principal plane, asperity pits on which a thin film is formed and a second substrate having a thickness of 0.3 mm or less with radiation cured resin such that the asperity pits face to the second substrate; peeling off the resin stamper after curing the radiation cured resin to form asperity pits on the second substrate; forming a metal film on the asperity pits on the second substrate to attain an information recording layer on the second substrate; and bonding a first substrate having an information recording layer and the second substrate having the formed information recording layer such that the both information recording layers face each other.

US-A-2003/0179693 describes a single-sided double layer optical disc, and method and apparatus for manufacturing the same, wherein a stamper is spin-coated with a 2P resin, a molded substrate having a first recording layer formed thereon is spin-coated with a UV curing adhesive agent, the molded substrate and the stamper are pressed and stuck to each other in vacuum and irradiated with UV to harden the adhesive layer and the 2P resin layer, and, when the stamper is peeled off, a second recording layer is formed on the 2P resin layer and a cover layer is formed on the second recording layer.

### Problems in the art

There are two problems to be solved.

**Firstly**, with increasing data density the homogeneity requirement on the bonding layer is increasing. To give an example, the requirement for the space layer of a Blu-Ray-DL Disk will be in the range of +/-1micron for an average layer thickness of 25micron over the whole disk. Standard bonding processes used in the DVD production are designed to achieve a thickness uniformity of +/-5micron.

One way of bonding two substrates is to coat each of the substrates individually with UV curable lacquer in a spin coating process and to join the substrates under vacuum (see e. g. WO2004/05793 & US2003/0179693). There are several techniques to control the thickness and thickness uniformity of the individual layers on the individual substrates very accurately. One way is to use a controlled heating of the lacquer during spinning and an appropriate spin profile (US2003/0145941 & WO2004/050261).
However, the control of the thickness uniformity of the lacquer applied on the substrates is not sufficient to guarantee a homogenous bonding layer. During the joining process and after joining there will be an unavoidable lacquer flow which causes uncontrollable changes in the thickness uniformity. This flow is driven by capillarity forces and also by mechanical forces originating from the not perfectly flat shape of the substrates.

**Secondly,** there is the unsolved problem of excess bonding lacquer at the outer edge of the substrates. Due to the nature of the bonding process there will be a certain amount of resin at the outer edge of the two substrates. After separation of the stamper substrate this adhesive material remains connected to the bonding layer and/or the first substrate. Due to its brittleness, the hardened adhesive forms a sharp rim around the substrate and dust or particles can easily be created. Sticking on the surface of the media those particles are lowering the production yield significantly.

Furthermore this sharp rim is causing process problems for the subsequent production steps, e.g. an additional lacquering or bonding step.

### Solution according to the invention

In order to create a bonding layer with a high uniformity in between a first substrate and a stamper substrate with a minimum of excess bonding lacquer at the outer rim, the following process has been developed. The following steps describe the method:

### 1.) Lacquering of the first substrate and the stamper substrate.

Both, the first substrate and the stamper substrate have to be coated with UV-curable resin in a spin coating step. The typical viscosity used to achieve finally a bonding layer thickness of 20-50micron is 200 to 700mPas. It is possible to apply different lacquer types onto the two substrates. In general, the lacquer on the stamper substrate has to have good replication properties, whereas the lacquer on the first substrate is usually selected according the needed adhesion and mechanical properties. The lacquer thickness on the first substrate might be thicker then the lacquer thickness on the stamper substrate or the other way round.

The individual layer uniformity may be adjusted according to the requirements by special means during the spin coating process, e.g. heat treatment.

### 2.) Irradiation at least one substrate with low power UV light.

After spin coating at least one of the substrates is irradiated with low intensity UV light. Here, low power UV intensity means a UV irradiance of less the 100mW/cm2; in contrast to high power UV irradiance of > 500mW/cm2 which is typically used for final curing of UV curable lacquers used in optical data storage industry. The aim is to reduce the lacquer flow during the following bonding step by increasing the viscosity of the lacquer, at least of a fraction of the lacquer. The light intensity has to be low enough, to ensure a wet surface on both disks. Joining two wet surfaces reduces the probability of air bubble formation during the bonding process. The hardening of the lacquer on one side of one of the substrates, as described in US 6,136,133 has to be avoided because of the risk of air bubble inclusions during the joining process.

Preferably the pre-curing step will be done directly prior to bonding. Rotation or masking of the substrate(s) is not necessary.
In one embodiment the UV light was supplied via a light guide to the substrate. The light guide was mounted 170mm above the centre of the substrate to be cured. At the centre of the disc a UV intensity of around 45mW/cm2 was measured. Due to the geometry, the UV intensity is decreasing to the outside of the disk. The typical curing time is 0.8 seconds.

### 3.) Joining the disk in vacuum

Joining in vacuum was done using the joining process described in WO2004/057939. Disks are joined in a controlled way, without pressing the substrates together.

### 4.) Irradiation of the joined disk

Directly after venting and opening the vacuum chamber the disc has to be irradiated a second time with low power UV-light to avoid a flow of the remaining liquid lacquer. The time delay between venting and second pre-curing should be less then 1 second, preferably less then 0.5s. The same UV source can be used which was used in the first pre-curing step. This time of course, the UV light has to pass either the first substrate or the stamper substrate.
It is important to note that directly after the vacuum bonding, the curing efficiency of the lacquer in between the substrates is significantly increased in comparison to standard conditions. This is because the oxygen molecules, which are normally decelerating the curing effect, have been removed in the vacuum process. Therefore, the second low power pre-curing of the bonded substrates leads to a considerably hardened lacquer in between the two disks.
However, due to the existence of oxygen in the vicinity of the outer rim of the bonded substrates, the lacquer at the surface of the outer rim of the disc remains liquid under the second pre-curing step.

### 5.) Removal of the excess lacquer using a spinning step

The liquid lacquer at the outer rim can be removed in a subsequent spinning step with a rotation speed higher then 500rpm. This step is a cleaning step of the outer rim to avoid the mentioned sharp rim of lacquer typically seen after separation of the two substrates.

### 6.) Separation

A final curing step has to be done with high power UV light, typically 600mw/cm2 is used. This is necessary to harden the remaining tacky resin at the outer edge. However, it is possible to separate the stamper substrate from the first substrate before final curing or after final curing.

### Further Advantages of the invention

With the inventive pre-curing before and after the bonding process the production of highly uniform bonding layer is possible. With the inventive post.spinning the outer edge of the disc can be cleaned without changing the homogeneity of the bonding layer.

The amount of waste lacquer is minimized, because only a very low fraction of lacquer is removed from the disc after pre-curing. Pre-curing is done without any mask therefore there are no alignment problems, usually connected with the usage of a mask. The 2 pre-curing steps can be done with one and the same curing device.

### Summary of the invention

The invention proposes a step of pre-curing before and after bonding of a first substrate and a second (stamper) substrate followed by spin-cleaning and separation. It comprises
A method for bonding of disk shaped substrates, with the steps
- providing the first and the second substrate,
- applying a liquid adhesive to the first bonding surface and the second surface,
- irradiating the lacquered surface of at least one of the substrates with UV light for increasing the viscosity of the lacquer,
- joining the substrates in vacuum,
- irradiating the joined disk with UV light for increasing the viscosity of the lacquer in between the joined disks,
- placing the disk onto a rotatable chuck,
- rotate the disc with a rotation speed preferably 500rpm,
- separate the 2 substrates to leave the full bonding layer on one of the substrates, and
- transfer of a sputtered layer from the stamper disk onto the first substrate.

Further features & embodiments comprise steps individually or jointly applicable, like:
- Irradiating the disk for final hardening before separation or after separation.
- Selecting the UV intensity used for pre-curing in a range of 10 to 100mW/cm2.
- Using one UV source for both pre-curing steps.
- Performing the pre-curing after bonding within one second after bonding, preferably 0.5s after bonding.
- Not transporting the substrates / disk during the 2 pre-curing (irradiation) steps.
- Rotating the disk after the second pre-curing (irradiation) for outer edge cleaning with a rotation speed higher then 500 rpm.
- Separating the stamper disk from the first substrate before/after final curing in cases where the substrates are only temporarily connected.
- Applying 2 different lacquers on the individual substrates.
- Adjusting the lacquer uniformity prior to bonding with a heating process.
- Providing for the lacquer thickness on the pre-cured substrate to be higher than on the not-pre-cured substrate.
- Supplying the UV light with the help of a light-guide.
- Placing the light guide in a distance of 10-20cm above the substrate / disc to be cured.

### Experiments and Result:

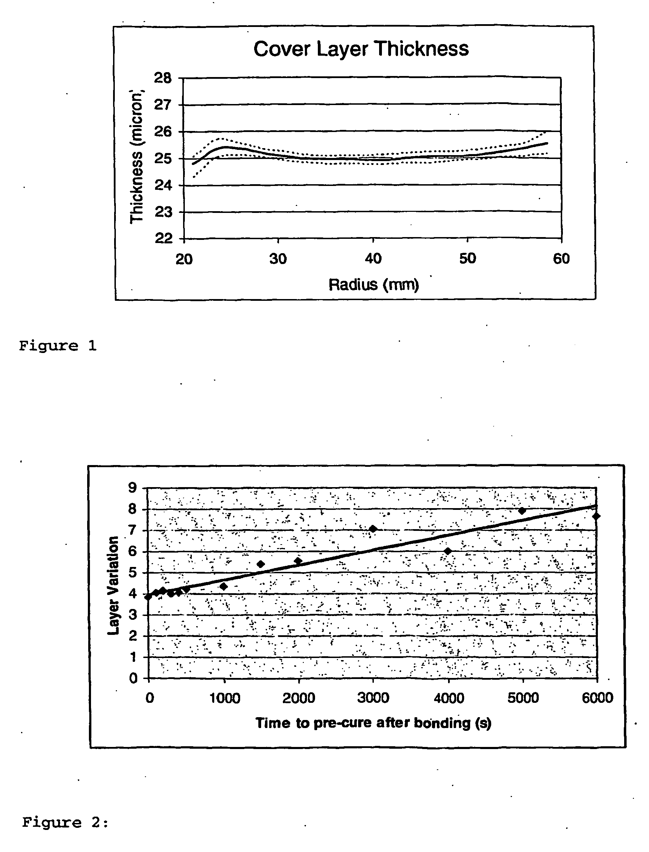

A 1.1mm thick BD substrate, coated with a thin silver layer, has been coated with 18micron of UV curable lacquer (viscosity 450mPas) in a spin coating process. During the spin coating a heat treatment of the lacquer was used to achieve a homogenous lacquer layer.
In a second step, a 0.6mm thick stamper substrate has been lacquered in the same way with a 7micron thick layer. The stamper disk material was made out of cyclo-olefin polymer material to ensure good separation properties.
Prior to bonding the 18micron thick lacquer layer on the BD substrate was irradiated with UV light. The UV light was supplied using a light guide 130mm above the centre of the first substrate. At the centre of the disc a UV intensity of around 45mW/cm2 was measured. Due to the geometry, the UV intensity is decreasing to the outside of the disk.
The same light source was used to irradiate the bonded substrates again, immediately after the bonding chamber has been opened (less the 200ms time delay between opening and UV irradiation). The Disk was then transported to a spin coater and the excess lacquer was removed at a spin speed of 5000rpm for 0.2 seconds. After final curing and separation of the stamper substrate, a thickness uniformity was measured as shown in fig. 1.

Another experiment was done to show the effect of a time delay between bonding and post-bonding curing. This time a 50micron bonding layer was adjusted and there was no pre-curing before bonding. Several disks have been prepared with different time delays between vacuum bonding and low UV intensity irradiation. Finally the thickness uniformity was analyzed. As shown in figure 2, there is a clear trend towards higher bonding layer thickness variation for an increased curing delay. The disc was not moved in the time before pre-curing.

## Claims

1. A method for bonding of disk shaped substrates, comprising the steps of:
- providing a first and a second substrate to be bonded via respective surfaces,
- applying a liquid adhesive to a first surface and a second surface on said first and second substrates,
- irradiating the adhesive-lacquered surface of at least one of the substrates with UV light for increasing the viscosity of the lacquer,
- joining the substrates in vacuum thereby forming a bonding layer,
- irradiating the joined substrates with UV light for increasing the viscosity of the lacquer in between the joined substrates,
- placing the joined substrates onto a rotatable chuck,
- rotate the joined substrates with a rotation speed > 500rpm,
- separate the joined substrates to leave the full bonding layer on one of the substrates,
**characterized in that** the method further includes the transfer of a earlier sputtered layer from a stamper disk onto the first substrate.

2. A method according to claim 1, further comprising a step of irradiating the substrates for final hardening of the bonding layer before or after the separation step.

3. A method according to claims 1-2, **characterized in that** a UV intensity is used for the first irradiation step is in a range of 10 to 100mW/cm2.

4. A method according to claim 2 or 3 when depending on claim 2, **characterized in that** one UV source is used for both irradiating steps.

5. A method according to claims 1-4, **characterized in that** the irradiation step after bonding is done within one second after bonding, preferably 0.5s after bonding.

6. A method according to claims 1-5, **characterized in that** two different lacquers are applied on the individual substrates.

7. A method according to claims 1-6, wherein the irradiating UV light is being supplied by means of a light-guide.

## Patentansprüche

1. Verfahren zum Bonden scheibenförmiger Substrate mit folgenden Schritten:
- Bereitstellen eines ersten und eines zweiten Substrats, die über jeweilige Flächen zu bonden sind,
- Aufbringen eines flüssigen Klebstoffs auf eine erste und eine zweite Fläche auf dem ersten und dem zweiten Substrat,
- Bestrahlen der mit einem Klebstoff lackierten Fläche mindestens eines der Substrate mit UV-Licht, um die Viskosität des Lacks zu erhöhen,
- Zusammenfügen der Substrate im Vakuum, um **dadurch** eine Bondschicht zu bilden,
- Bestrahlen der zusammengefügten Substrate mit UV-Licht, um die Viskosität des Lacks zwischen den zusammengefügten Substraten zu erhöhen,
- Anordnen der zusammengefügten Substrate auf einer drehbaren Aufspannvorrichtung,
- Drehen der zusammengefügten Substrate mit einer Drehgeschwindigkeit von mehr als 500 min⁻¹ und
- Trennen der zusammengefügten Substrate, um die vollständige Bondschicht auf einem der Substrate zu belassen,
**dadurch gekennzeichnet, dass** das Verfahren ferner folgenden Schritt aufweist: Übertragen einer zuvor gesputterten Schicht von einer Stamper-Scheibe auf das erste Substrat.

2. Verfahren nach Anspruch 1 mit einem weiteren Schritt des Bestrahlens der Substrate zum endgültigen Härten der Bondschicht vor oder nach dem Trennschritt.

3. Verfahren nach den Ansprüchen 1 und 2, **dadurch gekennzeichnet, dass** die für den ersten Bestrahlungsschritt verwendete UV-Intensität im Bereich von 10 bis 100 mW/cm² liegt.

4. Verfahren nach Anspruch 2 oder 3, wenn abhängig von Anspruch 2, **dadurch gekennzeichnet, dass** eine einzige UV-Quelle für beide Bestrahlungsschritte verwendet wird.

5. Verfahren nach den Ansprüchen 1 bis 4, **dadurch gekennzeichnet, dass** der Bestrahlungsschritt nach dem Bonden innerhalb einer Sekunde nach dem Bonden, vorzugsweise 0,5 s nach dem Bonden, ausgeführt wird.

6. Verfahren nach den Ansprüchen 1 bis 5, **dadurch gekennzeichnet, dass** zwei verschiedene Lacke auf die einzelnen Substrate aufgebracht werden.

7. Verfahren nach den Ansprüchen 1 bis 6, wobei das bestrahlende UV-Licht durch einen Lichtleiter zugeführt wird.

## Revendications

1. Procédé de liaison de substrats en forme de disque, comprenant les étapes suivantes :
- prévoir un premier et un deuxième substrats à assembler par l'intermédiaire des surfaces respectives,
- appliquer un adhésif liquide sur une première surface et une deuxième surface desdits premier et deuxième substrats,
- irradier la surface recouverte d'adhésif d'au moins un des substrats au moyen d'un rayon ultraviolet afin d'accroître la viscosité de la couche,
- assembler les substrats sous vide afin de former une couche de liaison,
- irradier les substrats assemblés à l'aide d'un rayon ultraviolet pour accroître la viscosité de la couche entre les substrats assemblés,
- placer les substrats assemblés sur un mandrin rotatif,
- faite tourner les substrats assemblés à une vitesse de rotation > 500 tr/min,
- séparer les substrats assemblés pour laisser l'ensemble de la couche de liaison sur un des substrats,
**caractérisé en ce que** le procédé comprend en outre le transfert d'une couche précédemment pulvérisée à partir d'un disque matrice sur le premier substrat.

2. Procédé selon la revendication 1, comprenant en outre une étape d'irradiation des substrats pour un durcissement final de la couche de liaison avant ou après l'étape de séparation.

3. Procédé selon les revendications 1 et 2, **caractérisé en ce qu'**une intensité UV utilisée pour la première étape d'irradiation est dans une plage comprise entre 10 et 100 mW/cm2.

4. Procédé selon la revendication 2 ou 3 lorsqu'elle dépend de la revendication 2, **caractérisé en ce qu'**une source UV est utilisée pour les deux étapes d'irradiation.

5. Procédé selon les revendications 1 à 4, **caractérisé en ce que** l'étape d'irradiation après la liaison est réalisée dans un délai d'une seconde après la liaison, de préférence 0,5 s après la liaison.

6. Procédé selon les revendications 1 à 5, **caractérisé en ce que** deux couches différentes sont appliquées sur chaque substrat.

7. Procédé selon les revendications 1 à 6, dans lequel le rayonnement ultraviolet est fourni au moyen d'un guide de lumière.
